# EUROPEAN PATENT SPECIFICATION

(11) **EP 2 794 302 B1**
(45) Date of publication and mention of the grant of the patent: **30.05.2018**
(21) Application number: 12801599.7
(22) Date of filing: 14.12.2012
(51) Int. Cl.: B60C 11/16

(54) **STUDDED TYRE**
SPIKEREIFEN
PNEU CLOUTÉ

(30) Priority: 21.12.2011 FR 1162122; 13.03.2012 US 201261610282 P
(43) Date of publication of application: 29.10.2014
(73) Proprietor: Compagnie Générale des Etablissements Michelin, 63000 Clermont-Ferrand (FR)
(72) Inventor: FABING, Daniel, F-63040 Clermont-Ferrand Cedex 9 (FR); BATNINI, Illyès, F-63040 Clermont-Ferrand Cedex 9 (FR)
(74) Representative: Millanvois, Patrick Jacques Jean
(86) International application number: PCT/EP2012/075613
(87) International publication number: WO 2013/092434

(56) References cited:
- CA-C- 2 069 696
- DE-A1-102009 044 547
- GB-A- 191 029 872

## Description

### FIELD OF THE INVENTION

The present invention relates to tyres for driving on ice comprising studs ("studded tyres").

### BACKGROUND

Studded tyres have undeniable advantages in terms of how they behave under winter driving conditions, for example when driving on an icy road surface. Contact with the ice, and more particularly the way in which the stud digs into the ice compensates for the reduction in grip observed at the tread pattern of the tyre tread. The studs scratch the ice and generate additional forces on the ice.

One of the difficulties in using studded tyres is that the grip values reach their upper limit at values that are inferior to those that could be expected.

In order to overcome this difficulty, it has been proposed (see, for example patent applications WO 2009/147046**,** WO 2009/147047**,** DE 10 2009 044547 A1) to provide grooves or cavities in the tread, near the stud, so that any shavings or particles of ice that are generated when the stud scratches the ice can be removed more quickly. As these shavings are removed more quickly, the thickness of the interface between the tread surface of the tyre and the surface of the ice is reduced, which in turn increases the effective protrusion (or depth to which the ice is scratched) and results in a more positive anchorage in the ice and appreciably improves performance in terms of grip on ice.

While this approach has allowed a significant improvement in the grip of a tyre comprising studs for driving on ice, there is still some room to improve the compromise between the level of grip on ice and stud retention when the tyre is used on asphalt.

### SUMMARY OF THE INVENTION

One of the objectives of the present invention is to improve the compromise between the level of grip achieved by the studs on ice and stud retention when the tyre used on asphalt.

This objective is achieved using a tyre designed to roll on ground that may be covered with ice, comprising:
a tread made of at least one rubber compound and having a tread surface, a plurality of housings opening onto the tread surface via an orifice and containing a stud, the orifice having a maximum dimension DO on the tread surface when the stud is in the housing;
the stud comprising: a base, designed to anchor the stud in the tread; a tip, designed to project from the tread in order to come into contact with the ice; a body connecting the base and the tip, the body having an axis of symmetry; and a longitudinal axis passing through the axis of symmetry of the body;
wherein the tread surrounding the stud forms an anchoring platform for the stud, this platform in turn being surrounded by a cavity opening onto the tread surface so that:
   the volume of recess opening onto the tread surface in a radius greater than or equal to D0/2 and less than or equal to D0/2 + 2 mm about the longitudinal axis of the stud is less than or equal to 20 mm³ ; and
   the volume of recess opening onto the tread surface in a radius greater than or equal to D0/2 + 2 mm and less than or equal to D0/2 + 4 mm about the longitudinal axis of the stud is greater than or equal to 60 mm³ and less than or equal to 100 mm³.

According to a first advantageous embodiment, the maximum depth of the cavity is less than or equal to HA/2, where HA is the depth of the housing containing the stud. Depths greater than HA/2 in fact lead to impaired stud retention.

According to a second advantageous embodiment, at least one bridge of rubber compound connecting the anchoring platform for the stud to the remainder of the tread passes across and through the cavity. This traverse of the cavity can be described as being such as locally to reduce the depth of the cavity. The existence of such a bridge improves the retention of the studs on ground that is tarmacked, wet, covered with snow and/or with ice.

For preference, the number of bridges of rubber compound passing through the cavity is greater than 1, which makes it possible to improve the anchoring of the stud in several directions perpendicular to the radial direction.

For preference, the number of such bridges of rubber compound is greater than or equal to 3 and the bridges are evenly distributed about the stud.

In one particularly advantageous configuration, the number of bridges evenly distributed about the stud is equal to 6. This number is high enough to guarantee good stud retention even in case one of the bridges became severed.

The bridges of rubber compound may intersect with the tread surface of the tyre in the as-new (unworn) condition, or they may have no intersection with the tread surface of the tyre in the as-new (unworn) condition.

For preference, the bridges of rubber compound have a rounded geometry, which reduces the risk of cracks spreading towards the inside of the tread.

According to a third preferred embodiment, the cavity surrounding the anchoring platform for the stud narrows as a function of depth.

The person skilled the art will understand that it is possible, and often desirable to combine several, or even all, of the embodiments mentioned herein above as specified within the claims.

### BRIEF DESCRIPTION OF THE DRAWINGS

Figure 1 depicts a tyre according to the prior art fitted with studs.
Figure 2 depicts a stud according to the prior art.
Figure 3 depicts a stud housing according to the prior art.
Figure 4 depicts a stud inserted in a stud housing, according to the prior art.
Figures 5 and 6 illustrate how studded tyres according to the prior art work.
Figures 7 and 8 depict a portion of the tread of such a tyre according to the prior art.
Figures 9 to 11 depict a portion of the tread of a tyre according to an embodiment of the invention.
Figures 12 to 15 show a portion of a tread of a tread of a tyre according to an embodiment of the invention, before and after the insertion of a stud.
Figure 16 depicts a mould element for moulding a portion of a tread of a tyre according to an embodiment of the invention.
Figure 17 is a plan view of a rubber block 40 of the tread according to an embodiment of the invention.

### DETAILED DESCRIPTION OF THE FIGURES

In the use of the term "radial" it is appropriate to make a distinction between the many various usages made of that word by the person skilled in the art. First of all, the expression refers to a radius of the tyre. It is with that meaning that a point P1 is said to be "radially inside" a point P2 (or "radially on the inside of" the point P2) if it is closer to the axis of rotation of the tyre than is the point P2. Conversely, a point P3 is said to be "radially outside" a point P4 (or "radially on the outside of" the point P4) if it is further away from the axis of rotation of the tyre than is the point P4. Progress is said to be "radially inwards (or outwards)" when in the direction of smaller (or larger) radii. Where radial distances are concerned, it is this meaning of the term that applies also.

By contrast, a thread or a reinforcement is said to be "radial" when the thread or the reinforcing elements of the reinforcement make with the circumferential direction an angle that is greater than or equal to 80° and less than or equal to 90°. Let it be emphasized that, in this document, the term "thread" is to be understood in an entirely general sense and covers threads in the form of monofilaments, multi-filaments, a cord, a folded yarn or an equivalent assembly and irrespective of the material of which the thread is made or of the surface treatment it may have received in order to enhance its bonding with the rubber.

Finally, a "radial section" or "radial cross section" here means a section or cross section in a plane that contains the axis of rotation of the tyre.

An "axial" direction is a direction parallel to the axis of rotation of the tyre. A point P5 is said to be "axially inside" a point P6 (or "axially on the inside of" the point P6) if it is closer to the mid-plane of the tyre than is the point P6. Conversely, a point P7 is said to be "axially outside" a point P8 (or "axially on the outside of" the point P8) if it is further away from the mid plane of the tyre than is the point P8. The "mid plane" of the tyre is the plane perpendicular to the axis of rotation of the tyre and which lies at equal distances between the annular reinforcing structures of each bead. When it is said that, in any radial cross section, the mid plane divides the tyre into two tyre "halves", that does not mean that the mid plane necessarily constitutes a plane of symmetry of the tyre. The expression " tyre half" here has a broader meaning and denotes a portion of the tyre that is of an axial width close to half the axial width of the tyre.

A "circumferential" direction is a direction which is perpendicular both to a radius of the tyre and to the axial direction.

The "tread surface" of a tread here denotes all of the points of the tread which come into contact with the ground when the tyre - inflated to its service pressure and without studs - is rolling on the ground.

In the context of this document, the expression "rubber compound" denotes a compound of rubber containing at least one elastomer and a filler.

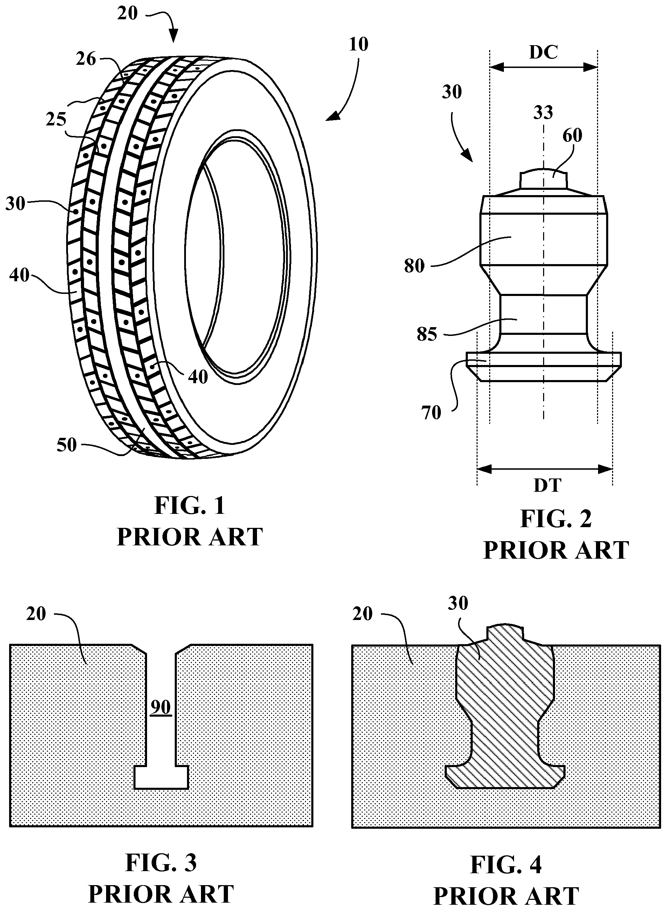

Figure 1 schematically depicts a tyre 10 according to the prior art comprising a tread 20 having a tread surface designed to come into contact with the ground when the tyre is rolling. The tread 20 comprises a plurality of transverse grooves 25 and of circumferential grooves 26 and a plurality of studs 30. The studs 30 are arranged across the entire width of the tread surface in rubber blocks 40 of the tread 20; "rubber blocks" mean an element of the tread made of vulcanized rubber compound and delimited by grooves. The central rib 50 of the tread may also be fitted with studs 30. The studs 30 are arranged in various positions around the periphery of the tyre so that at any instant there are studs in contact with the ground on which the tyre is rolling.

Figure 2 schematically depicts a stud 30 according to the prior art. The stud 30 has a longitudinal axis 33. The profile of the stud 30 is cylindrical and centred on the axis 33. The stud 30 has two axial ends: one of the axial ends defines a first part, here embodied by a tip 60, designed to come into contact with the ground (the ice, the snow or the bare road surface) when the stud 30 is fitted to the tyre 10 and the tyre 10 is rolling on the ground. The tip may advantageously be made of a separate material from that of the rest of the stud. That allows a harder material to be used for this part, which is subject to very high mechanical stresses. It also makes it possible, for certain product families, to have a moulded or injection-moulded body to which a tip is attached. Obviously, it is also possible to use studs that are made entirely from a single material.

The other end of the stud 30 is formed of a base 70 which is designed to anchor the stud 30 in the tread 20 of the tyre 10.

A body 80 connects the first part 60 and the base 70 of the stud 30. The mean diameter DC of the body is smaller than the mean diameter DT of the base 70 of the stud 30, these diameters being measured perpendicular to the axis 33 of the stud. The body 80 is separated from the base 70 by a part 85 the diameter of which is smaller than the diameters of the base and of the body.

Figure 3 schematically depicts part of the tread 20 of the tyre 10. This tread is provided with a housing 90. Each housing comprises a cylindrical portion open to the outside of the tread 20 of the tyre 10 and is designed to cooperate with a stud 30.

Figure 4 schematically depicts the same part of the tread 20 after the stud 30 has been inserted. Due to the elasticity of the rubber compound of which the tread is formed, the tread 20 perfectly envelops the stud 30 and anchors it firmly in the tyre.

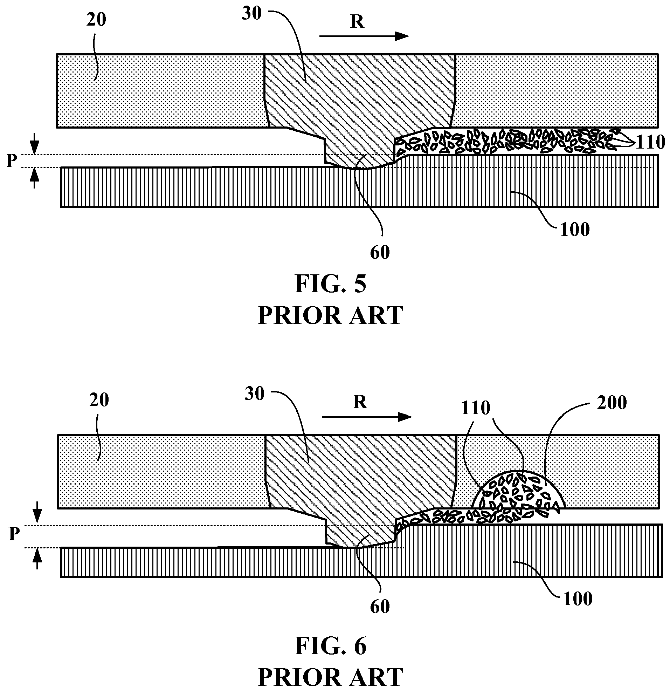

Figure 5 illustrates how a first studded tyre according to the prior art works. It depicts part of the stud 30 and of the tread 20 made of rubber compound which surrounds this part of the stud. The stud is depicted at the moment at which it comes into contact with the ice 100. The direction of rotation R of the tyre is indicated using an arrow R. The first part 60 of the stud 30 digs into the ice 100 as far as a mean depth P. By digging into the ice 100 and scratching it, the stud 30 locally breaks the ice and generates a multitude of ice shavings 110 which accumulate at the interface between the tread 20 and the ice 100 and ultimately prevent the first part 60 of the stud 30 from digging deeply into the ice 100, and this therefore has a negative effect on tyre grip.

Figure 6 illustrates how an improved tyre of the prior art (cf. patent application WO 2009/147047), which is able to reduce this negative effect, works. Specifically, this tyre comprises a cavity 200 in which the shavings 110 formed as the stud 30 digs into the ice 20, are stored. The shavings 110 therefore do not build up between the tread surface of the tread 20 and the ice 100. Thus, the stud 30 can dig further into the ice 100 so that a greater mean penetration depth P is obtained and the tyre grips the ice better.

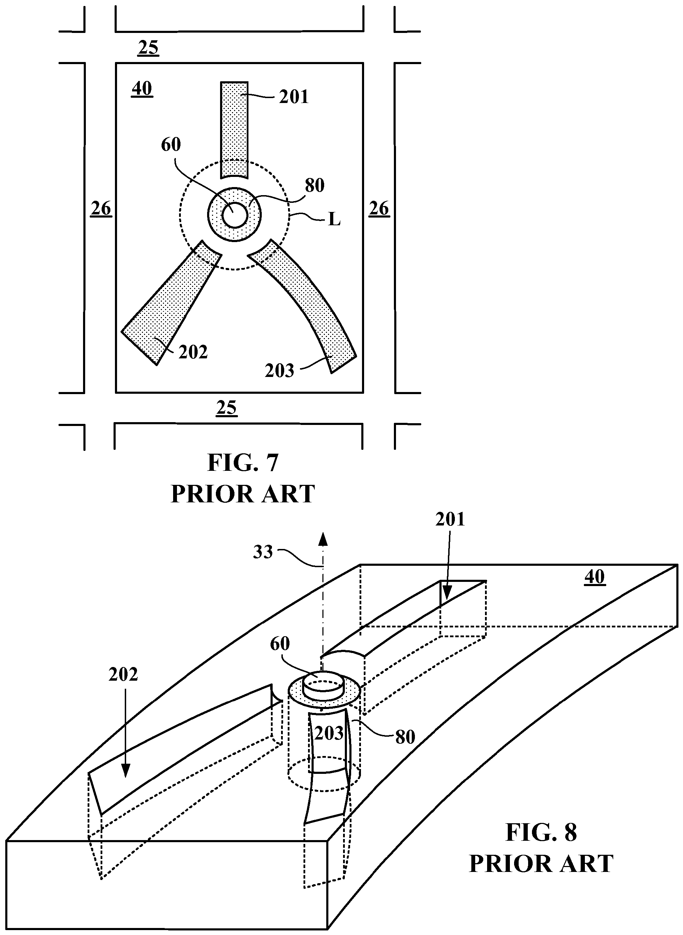

Figures 7 and 8 depict a portion of the tread of such a tyre according to the prior art. These figures schematically depict a rubber block 40 of the tread 20 of the tyre, viewed from a position radially on the outside of the tread (Figure 7) and in perspective (Figure 8). As Figure 7 suggests, this rubber block 40 is surrounded by a plurality of other blocks and is separated from these other blocks by transverse 25 and circumferential 26 grooves.

The rubber block 40 comprises a stud having a longitudinal axis 33 (see Figure 8), with a tip 60 projecting from the portion of tread surface formed by the rubber block 40. The stud is extended towards the inside of the tread by a body 80 (see Figure 8), only a portion of which is suggested in dotted line. The rubber block 40 furthermore comprises three cavities 201 to 203 associated with the stud 30, each having a volume of 60 mm³.

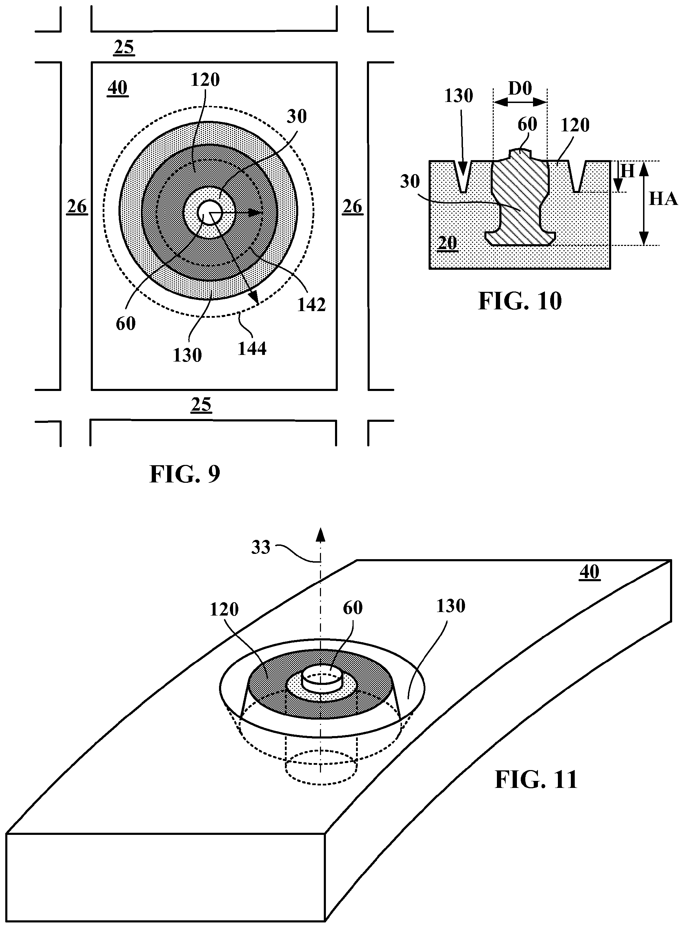

While this type of studded tyre has allowed a significant improvement in grip on ice, there is still room to improve the compromise between the level of grip on ice and stud retention when the tyre is used on asphalt. Such an improvement is obtained using a tyre according to an embodiment of the invention, a portion of the tread of which is depicted in Figures 9 to 11. Here, the tread surrounding the stud (the tip 60 of which projects from the tread) forms an anchoring platform 120 for the stud, this platform being in turn surrounded by a cavity 130 that opens onto the tread surface, so that two conditions are satisfied.

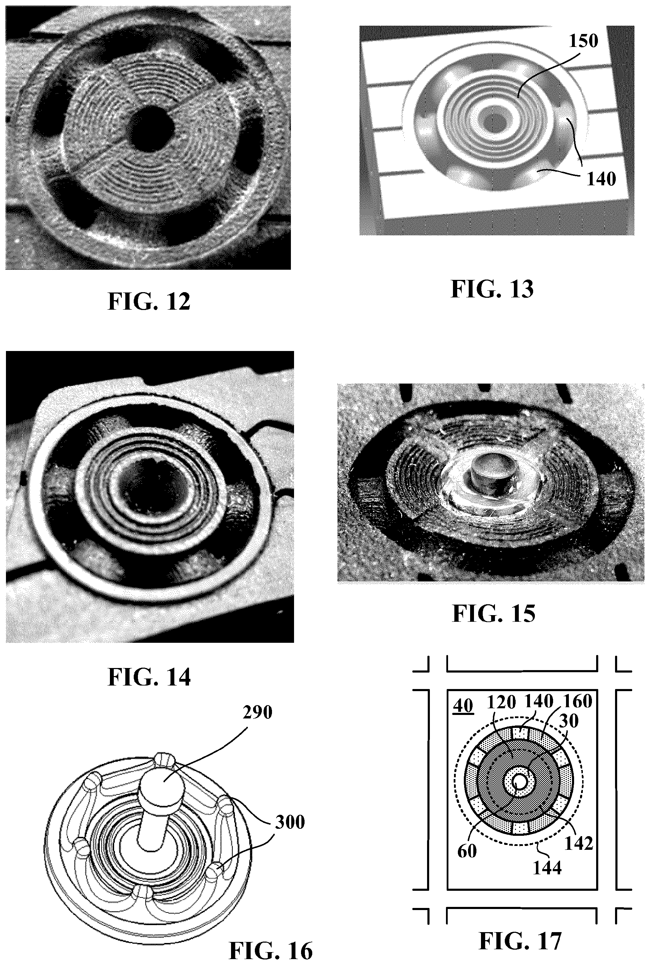

First, the volume of recess opening onto the tread surface in a radius greater than or equal to D0/2 (which here corresponds to the contour of the stud 30 on the tread) and less than or equal to D0/2 + 2 mm (indicated using the circle 142) about the longitudinal axis of the stud is less than or equal to 20 mm³. (For the stud depicted, DO is equal to 6.5 mm.) This condition corresponds to there being enough of an anchoring platform to anchor the stud firmly in the tread. There may be small cavities in this part, but in order not to compromise the anchoring significantly, these must not be voluminous. The applicant has found that a volume of 20 mm³ is a value not to be exceeded. The small cavities are depicted on the surface visible in Figs. 12 to 15 and identified by 150 in Fig. 13.

Second, the volume of recess opening onto the tread surface in a radius greater than or equal to D0/2 + 2 mm (indicated using the circle 142) and less than or equal to D0/2 + 4 mm (indicated using the circle 144) about the longitudinal axis of the stud is greater than or equal to 60 mm³ and less than or equal to 100 mm³ (in this particular instance, the volume is 80 mm³). This condition corresponds to there being a cavity capable of holding a certain amount of ice shavings at a sufficiently small distance away from the axis of the stud.

For preference, the maximum depth H of the cavity is less than or equal to HA/2, where HA is the depth of the housing containing the stud (see Figure 10). In this particular embodiment, the cavity surrounding the anchoring platform for the stud narrows as a function of depth.

According to one advantageous embodiment, at least one bridge of rubber compound connecting the anchoring platform for the stud to the remainder of the tread passes across and through the cavity. Figures 12 to 14 show a portion of a tyre tread at the point where the anchoring platform is connected to the remainder of the tread by six bridges 140, before (Figures 12 to 14) and after (Figure 15) insertion of a stud.

In this particular instance, the bridges do not intersect with the tread surface of the tyre in the as-new condition, but it is also possible to provide bridges that do intersect with the tread surface in the as-new condition. The cavity surrounding the anchoring platform can in fact be formed of a plurality of cavities, each of which opens onto the tread surface. This is depicted in Fig. 17 as cavities 160.

The bridges visible in Figures 12 to 15 have a rounded geometry in terms of the shape of the bridges and/or the junctions with the cavity walls. This reduces the risk of the spread of cracks towards the inside of the tread. When, for other reasons, this risk is negligible, it is of course possible to provide bridges, the geometry of which comprises sharp corners. The shape of the bridges can be generally cylindrical.

Figure 16 depicts a mould element for moulding the tread portion as shown in Figure 14. It is possible to see a portion 290 designed to mould the housing 90 (see Figure 3) and an annulus made up of teeth 300, designed to mould the bridges that connect the anchoring platform to the remainder of the tread.

Table 1 compares the results obtained with a studded tyre that has no ice reservoir ("A"), used as reference, a studded tyre according to WO 2009/147047 ("B") and a tyre according to an embodiment of the invention ("C"). The architecture of the tyre and the materials used were the same for all three tyres.

**Table 1**

| | "A" | "B" | "C" |
|---|---|---|---|
| Grip on ice | 100 | 110 | 105 |
| Stud retention | 100 | 90 | 115 |
| Compromise | 100 | 100 | 110 |

It may be seen that while solution "B" improves the grip on ice at the expense of stud retention, solution "C" improves both the grip on ice (even though not by as much as solution "B") and especially improves stud retention; it therefore makes a very significant improvement to the overall grip/retention compromise.

## Claims

1. Studded tyre (10) designed to roll on ground that may be covered with ice, comprising:
a tread (20) made of at least one rubber compound and having a tread surface, a plurality of housings (90) opening onto the tread surface via an orifice and containing a stud (30), the orifice having a maximum dimension DO on the tread surface when the stud is in the housing;
the stud comprising: a base (70), designed to anchor the stud in the tread; a tip (60), designed to project from the tread in order to come into contact with the ice; a body (80) connecting the base and the tip, the body having an axis of symmetry; and a longitudinal axis (33) passing through the axis of symmetry of the body;
**characterized in that** the tread (20) surrounding the stud (30) forms an anchoring platform (120) for the stud, this platform in turn being surrounded by a cavity (130) opening onto the tread surface so that:
the volume of recess opening onto the tread surface in a radius greater than or equal to D0/2 and less than or equal to D0/2 + 2 mm (142) about the longitudinal axis (33) of the stud (30) is less than or equal to 20 mm³ ; and
the volume of recess opening onto the tread surface in a radius greater than or equal to D0/2 + 2 mm (142) and less than or equal to D0/2 + 4 mm (144) about the longitudinal axis (33) of the stud (30) is greater than or equal to 60 mm³ and less than or equal to 100 mm³.

2. Tyre (10) according to Claim 1, **wherein** the maximum depth of the cavity (130) is less than or equal to HA/2, where HA is the depth of the housing (90) containing the stud (30).

3. Tyre (10) according to any of Claims 1 or 2, **wherein** at least one bridge (140) of rubber compound connecting the anchoring platform (120) for the stud (30) to the remainder of the tread (20) passes across and through the cavity (130).

4. Tyre (10) according to Claim 3, **wherein** the number of said bridges (140) of rubber compound is greater than 1.

5. Tyre (10) according to Claim 4, **wherein** the number of said bridges (140) of rubber compound is greater than or equal to 3 and wherein the bridges (140) are evenly distributed about the stud (30).

6. Tyre (10) according to Claim 5, **wherein** the number of bridges (140) is equal to 6.

7. Tyre (10) according to any of Claims 1 to 6, **wherein** the cavity (130) surrounding the anchoring platform (120) for the stud (30) narrows as a function of depth.

8. Tyre (10) according to any of Claims 1 to 7, **wherein** the bridges (140) of rubber compound intersect with the tread surface of the tyre in the as-new condition.

9. Tyre (10) according to any of Claims 1 to 7, **wherein** the bridges (140) of rubber compound do not intersect with the tread surface of the tyre in the as-new condition.

10. Tyre (10) according to any of Claims 1 to 9, **wherein** the bridges (140) of rubber compound have a rounded geometry.

## Patentansprüche

1. Spikereifen (10), der dazu ausgelegt ist, auf einem Untergrund zu rollen, der mit Eis bedeckt sein kann, umfassend:
eine Oberfläche (20), die aus wenigstens einer Gummimischung hergestellt ist und eine Lauffläche aufweist, wobei sich eine Vielzahl von Einkerbungen (90) über eine Öffnung in die Lauffläche öffnet und einen Spike (30) enthält, wobei die Öffnung eine maximale Abmessung D0 auf der Lauffläche aufweist, wenn sich der Spike in der Einkerbung befindet,
wobei der Spike eine Basis (70), die dazu ausgelegt ist, den Spike in der Oberfläche zu verankern, eine Spitze (60), die dazu ausgelegt ist, aus der Oberfläche vorzustehen, um in Kontakt mit dem Eis zu kommen, einen eine Symmetrieachse aufweisenden Körper (80), der die Basis und die Spitze verbindet, und eine Längsachse (33) umfasst, die durch die Symmetrieachse des Körpers führt,
**dadurch gekennzeichnet, dass** die den Spike (30) umgebende Oberfläche (20) eine Verankerungsplattform (120) für den Spike bildet, wobei diese Verankerungsplattform wiederum von einem Hohlraum (130) umgeben ist, der sich auf die Lauffläche öffnet, so dass:
das Volumen der Ausnehmung, die sich mit einem Radius, der größer oder gleich D0/2 und kleiner oder gleich D0/2 + 2 mm (142) um die Längsachse (33) des Spikes (30) ist, auf die Lauffläche öffnet, kleiner oder gleich 20 mm³ ist, und
das Volumen der Ausnehmung, die sich mit einem Radius, der größer oder gleich D0/2 + 2 mm (142) und kleiner oder gleich D0/2 + 4 mm (144) um die Längsachse (33) des Spikes (30) ist, auf die Lauffläche öffnet, größer oder gleich 60 mm³ und kleiner oder gleich 100 mm³ ist.

2. Reifen (10) nach Anspruch 1, **wobei** die maximale Tiefe des Hohlraums (130) kleiner oder gleich HA/2 ist, wobei HA die Tiefe der Einkerbung (90), die den Spike (30) enthält, ist.

3. Reifen (10) nach einem der Ansprüche 1 oder 2, **wobei** wenigstens eine Brücke (140) der Gummimischung, die die Verankerungsplattform (120) für den Spike (30) mit dem Rest der Oberfläche (20) verbindet, über und durch den Hohlraum (130) führt.

4. Reifen (10) nach Anspruch 3, **wobei** die Anzahl der Brücken (140) der Gummimischung größer 1 ist.

5. Reifen (10) nach Anspruch 4, **wobei** die Anzahl der Brücken (140) der Gummimischung größer oder gleich 3 ist und wobei die Brücken (140) gleichmäßig um den Spike (30) verteilt sind.

6. Reifen (10) nach Anspruch 5, **wobei** die Anzahl der Brücken (140) gleich 6 ist.

7. Reifen (10) nach einem der Ansprüche 1 bis 6, **wobei** sich der Hohlraum (130), der die Verankerungsplattform (120) für den Spike (30) umgibt, in Abhängigkeit der Tiefe verengt.

8. Reifen (10) nach einem der Ansprüche 1 bis 7, **wobei** sich die Brücken (140) der Gummimischung im Neuzustand mit der Lauffläche des Reifens schneiden.

9. Reifen (10) nach einem der Ansprüche 1 bis 7, **wobei** sich die Brücken (140) der Gummimischung im Neuzustand nicht mit der Lauffläche des Reifens schneiden.

10. Reifen (10) nach einem der Ansprüche 1 bis 9, **wobei** die Brücken (140) der Gummimischung eine abgerundete Geometrie aufweisen.

## Revendications

1. Pneumatique clouté (10) destiné à rouler sur un sol pouvant être couvert de glace, comportant :
une bande de roulement (20) réalisée en au moins une composition caoutchouteuse et ayant une surface de roulement, une pluralité de logements (90) débouchant sur la surface de roulement par un orifice et contenant un clou (30), l'orifice ayant une dimension maximale DO sur la surface de roulement lorsque le clou est dans le logement ;
le clou comportant : une tête (70), destinée à ancrer le clou dans la bande de roulement ; une mise (60), destinée à faire saillie sur la bande de roulement, pour entrer en contact avec la glace ; un corps (80) reliant la tête et la mise, le corps ayant un axe de symétrie ; et un axe longitudinal (33) passant par l'axe de symétrie du corps ;
**caractérisé en ce que** la bande de roulement (20) entourant le clou (30) forme une plateforme d'ancrage (120) du clou, cette plateforme étant à son tour entourée d'une cavité (130) débouchant sur la surface de roulement, de sorte que :
le volume de creux débouchant sur la surface de roulement dans un rayon supérieur ou égal à D0/2 et inférieur ou égal à D0/2 + 2 mm (142) autour de l'axe longitudinal (33) du clou est inférieur ou égal à 20 mm³ ; et
le volume de creux débouchant sur la surface de roulement dans un rayon supérieur ou égal à D0/2 + 2mm (142) et inférieur ou égal à D0/2 + 4 mm (144) autour de l'axe longitudinal (33) du clou (30) est supérieur ou égal à 60 mm³ et inférieur ou égal à 100 mm³.

2. Pneumatique (10) selon la revendication 1, dans lequel la profondeur maximale de la cavité (130) est inférieure ou égale à HA/2, où HA est la profondeur du logement (90) contenant le clou (30).

3. Pneumatique (10) selon l'une quelconque des revendications 1 ou 2, dans lequel au moins un pont (140) en composition caoutchouteuse reliant la plateforme d'ancrage (120) du clou (30) au reste de la bande de roulement (20) traverse la cavité (130).

4. Pneumatique selon la revendication 3, dans lequel le nombre desdits ponts (140) en composition caoutchouteuse est supérieur à 1.

5. Pneumatique selon la revendication 4, dans lequel le nombre desdits ponts (140) en composition caoutchouteuse est supérieur ou égal à 3 et dans lequel les ponts sont régulièrement répartis autour du clou.

6. Pneumatique selon la revendication 5, dans lequel le nombre de ponts (140) est égal à 6.

7. Pneumatique selon l'une quelconque des revendications 1 à 6, dans lequel la cavité (130) entourant la plateforme d'ancrage (120) du clou (30) se rétrécit en fonction de la profondeur.

8. Pneumatique selon l'une quelconque des revendications 1 à 7, dans lequel les ponts (140) en composition caoutchouteuse ont une intersection avec la surface de roulement du pneumatique à l'état neuf.

9. Pneumatique selon l'une quelconque des revendications 1 à 7, dans lequel les ponts (140) en composition caoutchouteuse n'ont pas d'intersection avec la surface de roulement du pneumatique à l'état neuf.

10. Pneumatique selon l'une quelconque des revendications précédentes, dans lequel les ponts (140) en composition caoutchouteuse ont une géométrie arrondie.
